Europäisches Patentamt

European Patent Office

Office européen des brevets

Veröffentlichungsnummer: **0 384 422**

**A1**

## EUROPÄISCHE PATENTANMELDUNG

Anmeldenummer: 90103298.7

Anmeldetag: 21.02.90

Int. Cl.5 **F16H 7/10**

Priorität: 21.02.89 DE 3905218

Veröffentlichungstag der Anmeldung:
29.08.90 Patentblatt 90/35

Benannte Vertragsstaaten:
AT BE CH DK ES FR GB GR IT LI LU NL SE

Anmelder: **Firma Muhr und Bender**
**Kölner Strasse 99**
**D-5952 Attendorn(DE)**

Erfinder: **Muhr, Karl-Heinz, Dr.-Ing.**
**In der Stesse 2**
**D-5952 Attendorn(DE)**
Erfinder: **Roth, Ulrich**
**Fichtenweg 9**
**D-5241 Neunkhausen(DE)**

Vertreter: **Gesthuysen, Hans Dieter, Dipl.-Ing.**
**et al**
**Patentanwälte Gesthuysen + von Rohr**
**Huyssenallee 15 Postfach 10 13 33**
**D-4300 Essen 1(DE)**

**Einstelleinrichtung für die Einstellung der Riemenspannung des Treibriemens eines Kraftfahrzeugs.**

Dargestellt und beschrieben ist eine Einstelleinrichtung (1) für die Einstellung der Riemenspannung des Treibriemens eines Kraftfahrzeugs, mit einem Spannkraftangriffselement (2) und einem mit einem Spanngegenelement (3) zusammenwirkenden Spannelement (4).

Dadurch, daß bei der erfindungsgemäßen Einstelleinrichtung (1) zwischen dem Spannkraftangriffselement (2) und dem Spannelement (4) eine Spannkraftbegrenzung (6) verwirklicht ist, ist erreicht, daß ohne besondere Hilfsmittel, insbesondere ohne Momentenschlüssel od. dgl., stets die richtige Riemenspannung eingestellt wird.

EP 0 384 422 A1

**Fig. 1**

## Einstelleinrichtung für die Einstellung der Riemenspannung des Treibriemens eines Kraftfahrzeugs

Die Erfindung betrifft eine Einstelleinrichtung für die Einstellung der Riemenspannung des Treibriemens eines Kraftfahrzeugs, mit einem Spannkraftangriffselement und einem mit einem Spanngegenelement zusammenwirkenden Spannelement.

In Kraftfahrzeugen werden bekanntlich durch den Fahrzeugmotor verschiedene Hilfsaggregate angetrieben, z. B. die Lichtmaschine, die Pumpe für die Wasserkühlung des Fahrzeugmotors, der Ventilator für die Rückkühlung des Kühlwassers usw. Dies geschieht durch eine auf der Motorwelle des Fahrzeugmotors sitzende Haupt-Riemenscheibe und durch einen endlosen Treibriemen, der einerseits über die Haupt-Riemenscheibe und andererseits über auf den Antriebswellen der Hilfsaggregate sitzende Hilfs-Riemenscheiben läuft. Für die Funktionstüchtigkeit der Hilfsaggregate und für die Lebensdauer des Treibriemens ist die Einstellung und Beibehaltung der richtigen Riemenspannung des Treibriemens von besonderer Bedeutung. In den ADAC-Pannenstatistiken folgt die Pannenursache "Treibriemen" seit 1984 in leidiger Regelmäßigkeit gleich hinter "Kupplungs- und Getriebeschäden".

Wie bereits angesprochen, muß zunächst werkseitig die Riemenspannung des Treibriemens richtig eingestellt werden. Das geschieht natürlich auch, - problemlos mit Hilfe entsprechender, werkseitig vorhandener Einstell-und Meßeinrichtungen. Darüber hinaus muß die Riemenspannung von Zeit zu Zeit neu eingestellt werden können.

Im Stand der Technik, von dem die Erfindung ausgeht, geschieht die spätere Einstellung der Riemenspannung dadurch, daß ein Hilfsaggregat, in der Regel die Lichtmaschine, in der Ebene des Treibriemens verstellbar ist. Dazu ist z. B. die Lichtmaschine einerseits schwenkbar an den Fahrzeugmotor angeschlossen, andererseits mit der Einstelleinrichtung, bestehend aus einem Spannkraftangriffselement, z. B. einem Sechskant, und aus einem Spannelement, z. B. einem Ritzel, versehen, wobei die Einstelleinrichtung mit einem am Fahrzeugmotor angeschlossenen Spanngegenelement, z. B. einer Zahnstange, zusammenwirkt. Nach dem Lösen einer in die Lichtmaschine bzw. in einen an der Lichtmaschine vorgesehenen Spannarm eingeschraubten Arretierungsschraube wird auf das Spannkraftangriffselement, z. B. mit Hilfe eines Schraubenschlüssels auf den Sechskant, eine Spannkraft ausgeübt, die dann dadurch zu einer Spannung des Treibriemens führt, das mit Hilfe des gegen das Spanngegenelement arbeitenden Spannelements die Lichtmaschine gegenüber dem Fahrzeugmotor verschwenkt und damit in der Ebene des Treibriemens verstellt wird.

Nachteilig ist im Stand der Technik, daß entweder die Spannkraft mit Hilfe eines Momentenschlüssels od. dgl. aufgebracht werden muß oder, wenn ein hmentenschlüssel nicht vorhanden ist bzw. nicht verwendet oder nicht richtig benutzt wird, von Fall zu Fall unterschiedliche Spannkräfte ausgeübt und folglich unterschiedliche Riemenspannungen eingestellt werden.

Der Erfindung liegt folglich die Aufgabe zugrunde, die Einstelleinrichtung für die Einstellung der Riemenspannung des Treibriemens eines Kraftfahrzeugs, von der die Erfindung ausgeht, so auszugestalten und weiterzubilden, daß ohne besondere Hilfsmittel, insbesondere ohne Momentenschlüssel od. dgl., stets die richtige Riemenspannung eingestellt wird.

Die erfindungsgemäße Einstelleinrichtung für die Einstellung der Riemenspannung des Treibriemens eines Kraftfahrzeugs, bei der die zuvor hergeleitete und dargelegte Aufgabe gelöst ist, ist zunächst und im wesentlichen dadurch gekennzeichnet, daß zwischen dem Spannkraftangriffselement und dem Spannelement eine Spannkraftbegrenzung verwirklicht ist. Erfindungsgemäß ist also der im Stand der Technik für eine stets richtige Einstellung der Riemenspannung erforderliche externe Spannkraftbegrenzer, z. B. in Form eines Momentenschlüssels od. dgl., in die Einstelleinrichtung integriert. Folglich kann mit Hilfe der erfindungsgemäßen Einstelleinrichtung jeder, der überhaupt mit einem Schraubenschlüssel umgehen kann, die Riemenspannung des Treibriemens seines Kraftfahrzeugs ohne weiteres richtig einstellen.

Im einzelnen gibt es verschiedene Möglichkeiten, die erfindungsgemäße Einstelleinrichtung für die Einstellung der Riemenspannung des Treibriemens eines Kraftfahrzeugs auszuführen. Das wird im folgenden anhand mehrerer lediglich Ausführungsbeispiele darstellenden Zeichnungen näher erläutert. Es zeigen

Fig. 1 eine perspektivische Darstellung einer bevorzugten Ausführungsform einer erfindungsgemäßen Einstelleinrichtung für die Einstellung der Riemenspannung des Treibriemens eines Kraftfahrzeugs, im Zusammenwirken mit einem als Zahnstange ausgeführten Spanngegenelement,

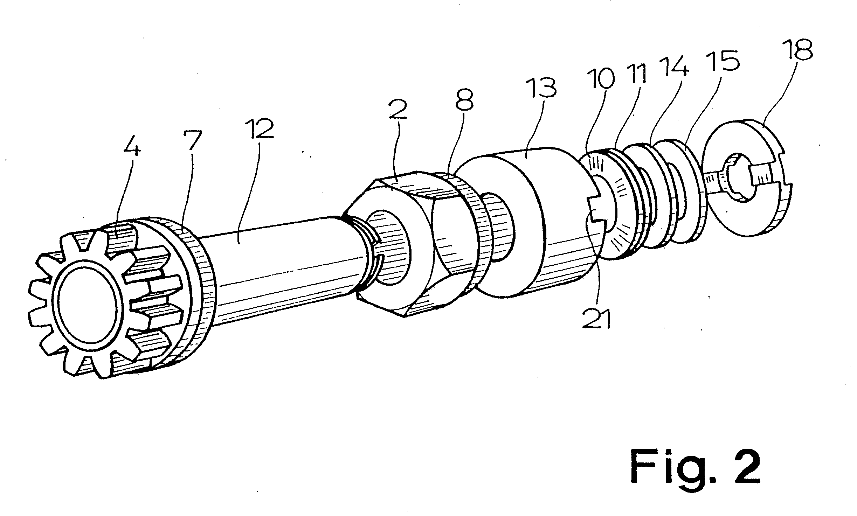

Fig. 2 eine Sprengdarstellung der Einstelleinrichtungg nach Fig. 1,

Fig. 3 einen Schnitt durch die Einstelleinrichtung nach Fig. 1 und

Fig. 4 eine Aufsicht auf ein weiteres Ausführungsbeispiel der erfindungsgemäßen Einstelleinrichtung.

Die in den Figuren dargestellte Einstelleinrichtung 1 ist bestimmt für die Einstellung der Riemenspannung des Treibriemens eines Kraftfahrzeugs und besteht zunächst aus einem Spannkraftangriffselement 2 und einem mit einem Spanngegenelement 3 zusammenwirkenden Spannelement 4.

Wie eingangs ausgeführt, geschieht die Einstellung der Riemenspannung dadadurch, daß ein Hilfsaggregat. z. B. die Lichtmaschine, in der Ebene des Treibriemens verstellt wird. Dazu ist die nicht dargestellte Lichtmaschine einerseits schwenkbar an den nicht dargestellten Fahrzeugmotor angeschlossen, andererseits mit der Einstelleinrichtung 1 versehen, wobei die Einstelleinrichtung mit dem am Fahrzeugmotor angeschlossenen Spanngegenelement 3 zusammenwirkt. Nach dem Lösen einer in die Lichtmaschine bzw. in einen an der Lichtmaschine vorgesehenen, hier nicht dargestellten Spannarm einge schraubten Arretierungsschraube 5 wird auf das Spannkraftangriffselement 2 eine Spannkraft ausgeübt, die dann dadurch zu einer Spannung des Treibriemens führt, daß mit Hilfe des gegen das Spanngegenelement 3 arbeitenden Spannelements 4 die Lichtmaschine gegenüber dem Fahrzeugmotor verschwenkt und damit in der Ebene des Treibriemens verstellt wird.

Bei der erfindungsgemäßen Einstelleinrichtung 1 ist nun zwischen dem Spannkraftangriffselement 2 und dem Spannelement 4 eine Spannkraftbegrenzung 6· verwirklicht. Damit ist erreicht, daß ohne besondere Hilfsmittel, insbesondere ohne Momentenschlüssel od. dgl., stets die richtige Riemenspannung eingestellt wird.

Im dargestellten Ausführungsbeispiel sind als Spannkraftbegrenzung 6 zwei Reibbeläge 7, 8 vorgesehen und sind das Spannkraftangriffselement 2 und das Spannelement 4 unter Zwischenschaltung der Reibbeläge 7, 8 kraftschlüssig miteinander verbunden. Dabei ist zur Erzeugung des Kraftschlusses zwischen dem Spannkraftangriffselement 2 und dem Spannelement 4 ein Federelement 9 vorgesehen, das aus zwei Tellerfedern 10, 11 besteht.

Bei der erfindungsgemäßen Einstelleinrichtung 1 können das Spannkraftangriffselement 2 und das Spannelement 4 insbesondere so ausgeführt sein, wie dies auch bei der Einstelleinrichtung, von der die Erfindung ausgeht, der Fall ist. Wie die Figuren zeigen, sind also das Spannkraftangriffselement 2 als Vielkantscheibe, nämlich als Sechskantscheibe und das Spannelement 4 als Ritzel ausgeführt.

Die erfindungsgemäße Einstelleinrichtung 1 für die Einstellung der Riemenspannung des Treibriemens eines Kraftfahrzeugs besteht, wie zuvor dargelegt, funktionell aus dem Spannkraftangriffselement 2, dem Spannelement 4 und der Spannkraftbegrenzung 6. Die Erfindung lehrt aber nicht nur das funktionelle Zusammenwirken des Spannkraftangriffselements 2, des Spann elements 4 und der Spannkraftbegrenzung 6 bei einer Einstelleinrichtung 1 für die Einstellung der Riemenspannung des Treibriemens eines Kraftfahrzeugs, vielmehr gehört zur Lehre der Erfindung mit besonderer Bedeutung auch der konstruktive Aufbau und die konstruktive Vereinigung der funktionsnotwendigen Bauelemente.

Bei der in den Figuren dargestellten bevorzugten Ausführungsfom einer erfindungsgemäßen Einstelleinrichtung 1 ist das Spannelement 4 mit einer Lagerhülse 12 versehen und das Spannkraftangriffselement 2 mit Spiel auf der Lagerhülse 12 angeordnet. Dargestellt ist eine zweiteilige Ausführungsfom von Spannelement 4 und Lagerhülse 12, denkbar ist jedoch auch, daß das Spannelement 4 und die Lagerhülse 12 einteilig ausgeführt sind. Des weiteren ist ein Federelementgehäuse 13 vorgesehen, in dem das Federelement 9 angeordnet ist, im vorliegenden Fall also die Tellerfedern 10, 11 angeordnet sind. Das Federelementgehäuse 13 ist in Richtung auf das Spannkraftangriffselement 2 axial verschieblich, aber drehfest auf der Lagerhülse 12 des Spannelements 4 angeordnet. Erst durch das "Zusammenspiel" von Spannelement 4 und Lagerhülse 12 einerseits und auf der Lagerhülse 12 drehfest, aber axial vorderend angeordnetem Federelementgehäuse 13 andererseits wird erreicht, daß auf jeden Fall beide - vorzugsweise gleich große - Reibbeläge 7, 8 gleichermaßen beansprucht werden und auch - nach Überschreiten einer vorbestimmten Kraft - beide Reibbeläge 7, 8 der Bewegung des Spannkraftangriffselements 2 zuverlässig nicht mehr folgen.

Zuvor ist bereits ausgeführt worden, daß bei der dargestellten Ausführungsform der erfindungsgemäßen Einstelleinrichtung 1 als Spannkraftbegrenzung 6 zwei Reibbeläge 7, 8 vorgesehen sind. Im einzelnen sind das Spannkraftangriffselement 2 an der dem Federelementgehäuse 13 zugewandten Seite und das Spannelement 4 an der dem Spannkraftangriffselement 2 zugewandten Seite jeweils mit einem Reibbelag 7, 8 versehen.

Wie bereits mehrfach ausgeführt, kann mit Hilfe der erfindungsgemäßen Einstelleinrichtung 1 die Riemenspannung des Treibriemens eines Kraftfahrzeugs stets richtig eingestellt werden, ohne daß dazu besondere Hilfsmittel, beispielsweise ein Momentenschlüssel od. dgl., benötigt wird.

Um nun bei Einstelleinrichtungen 1 mit gleichen Bauelementen, also gleichem Spannkraftangriffselement 2, gleichem Spannelement 4, gleichen Reibbelägen 7, 8 und gleichem Federelement 9, beispielsweise also gleichen Tellerfedern 10 und 11, unterschiedliche Spannkräft realisieren zu können, sind innerhalb des Federelementgehäuses 13 zusätzlich zu dem Federelement 9 Ausgleichscheiben 14, 15 vorgesehen. Mit Hilfe unterschiedlicher Federelemente 9, im Ausführungsbeispiel also unterschiedlicher Tellerfedern 10, 11, und unterschiedlicher Ausgleichsscheiben 14, 15 können unterschiedliche Federkräfte und damit unterschiedliche Spannkräfte "eingebaut" werden.

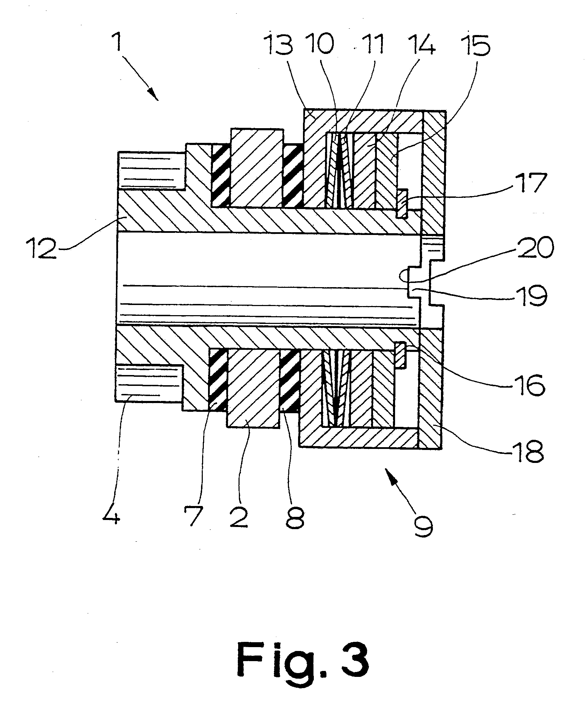

Im übrigen kann der Fig. 3 entnommen werden, daß bei der dargestellten bevorzugten Ausführungsform der erfindungsgemäßen Einstelleinrichtung 1 die Lagerhülse 12 des Spannelements 4 eine innerhalb des Federelementgehäuses 13 liegende umlaufende Fixierungsnut 16 aufweist und in die Fixierungsnut 16 ein das Federelement 9. also die Tellerfedern 10, 11 und die Ausgleichsscheiben 14, 15 axial festlegendes Fixierungselement 17, nämlich ein Sprengring eingesetzt ist.

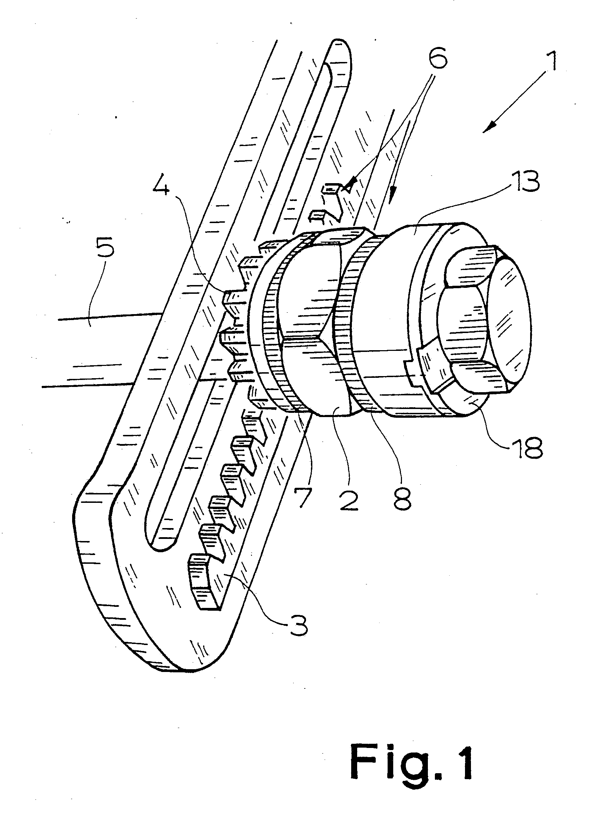

Die Fig. 1 und 3, insbesondere die Fig. 3, zeigen, daß das Federelementgehäuse 13 an der dem Spannkraftangriffselement 2 abgewandten Seite mit einer Abdeckscheibe 18 verschlossen ist. Dabei weist die Abdeckscheibe 18 einen radial verlaufenden Verbindungssteg 19 auf, der einerseits in Schlitze 20 der Lagerhülse 12 des Spannelements 4 und andererseits in Schlitze 21 des Federelementgehäuses 13 eingreift. Mit Hilfe des Verbindungssteges 9 der Abdeckscheibe 18 sind also das Spannelement 4 und das Federelementgehäuse 13 drehfest miteinander verbunden, und zwar über die Lagerhülse 12, die, wie bereits beschrieben, ihrerseits drehfest in bezug auf das Spannelement 4 ist.

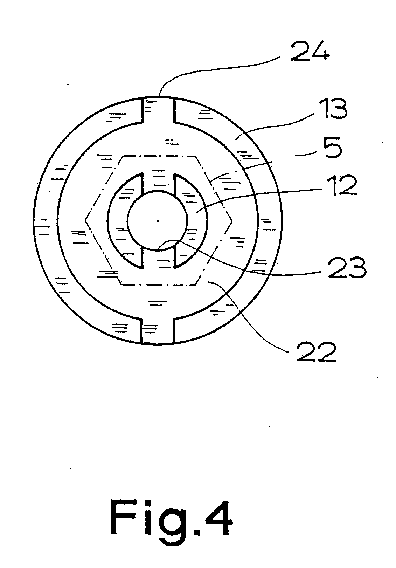

Schließlich zeigt Fig. 4 eine andere Ausführungsform der Abdeckscheibe 18, die zwei gegenüberliegende Innennasen 22 und zwei gegenüberliegende Außennasen 23 aufweist. Auch hier erfolgt die drehfeste Verbindung zwischen Spannhülse 12 und Federelementgehäuse 13 über die Abdeckscheibe 18, wobei die Innennasen 22 und die Außennasen 23 in die Schlitze 20, 21 der Lagerhülse 12 bzw. des Federelementgehäuses 13 eingreifen. Die in Fig. 4 dargestellte Abdeckscheibe 18 ist gegenüber der Abdeckscheibe 18 aus Fig. 3 herstellungstechnisch günstiger, da sie über ihre gesamte Fläche die gleiche Stärke aufweist und daher im Stanzverfahren hergestellt werden kann. Aus Fig. 4 geht ferner hervor, daß mittels der gestrichelt dargestellten Arretierungsschraube 5 eine Sicherung der beschriebenen drehfesten Verbindung der Abdeckscheibe 18 mit dem Federelementgehäuse 13 erfolgt. Eine entsprechende Sicherung enthält auch das Ausführungsbeispiel nach Fig. 3, bei dem die Arretierungsschraube 5 jedoch nicht dargestellt ist.

Für eine lange Lebensdauer der erfindungsgemäßen Einstelleinrichtung ist es zweckmäßig, wenn das Federelementgehäuse mit einer nicht dargestellten Schutzkappe versehen ist. Eine solche Schutzkappe schützt das Innere des Federelementgehäuses vor Schmutz und Wasser und kann - werksseitig aufgebracht - bei entsprechender farblicher Gestaltung direkt das baulich vorgegebene Ansprechdrehmoment kennzeichnen.

## Ansprüche

1. Einstelleinrichtung für die Einstellung der Riemenspannung des Treibriemens eines Kraftfahrzeugs, mit einem Spannkraftangriffselement und einem mit einem Spanngegenelement zusammenwirkenden Spannelement, **da durch gekennzeichnet**, daß zwischen dem Spannkraftangriffselement (2) und dem Spannelement (4) eine Spannkraftbegrenzung (6) verwirklicht ist.

2. Einstelleinrichtung nach Anspruch 1, dadurch gekennzeichnet, daß als Spannkraftbegrenzung (6) mindestens ein Reibbelag vorgesehen ist, vorzugsweise zwei Reibbeläge (7, 8) vorgesehen sind.

3. Einstelleinrichtung nach Anspruch 2, dadurch gekennzeichnet, daß das Spannkraftangriffselement (2) und das Spannelement (4) unter Zwischenschaltung des Reibbelages bzw. der Reibbeläge (7, 8) kraftschlüssig miteinander verbunden sind.

4. Einstelleinrichtung nach Anspruch 3, dadurch gekennzeichnet, daß zur Erzeugung des Kraftschlusses zwischen dem Spannkraftangriffselement (2) und dem Spannelement (4) ein Federelement (9) vorgesehen ist.

5. Einstelleinrichtung nach Anspruch 4, dadurch gekennzeichnet, daß als Federelement (9) mindestens eine Tellerfeder (10, 11) vorgesehen ist.

6. Einstelleinrichtung nach einem der Ansprüche 1 bis 5, dadurch gekennzeichnet, daß das Spannkraftangriffselement (2) als Vielkantscheibe, vorzugsweise als Sechskantscheibe ausgeführt ist.

7. Einstelleinrichtung nach einem der Ansprüche 1 bis 6, dadurch gekennzeichnet, daß das Spannelement (4) als Ritzel ausgeführt ist.

8. Einstelleinrichtung nach einem der Ansprüche 1 bis 7, dadurch gekennzeichnet, daß das Spannelement (4) mit einer Lagerhülse (12) versehen ist und das Spannkraftangriffselement (2) mit Spiel auf der Lagerhülse (12) angeordnet ist.

9. Einstelleinrichtung nach einem der Ansprüche 1 bis 8, dadurch gekennzeichnet, daß das Spannelement (4) und die Lagerhülse (12) einteilig ausgeführt sind.

10. Einstelleinrichtung nach einem der Ansprüche 4 bis 9, dadurch gekennzeichnet, daß ein Federelementgehäuse (13) vorgesehen und das Federelement (9) innerhalb des Federelementgehäuses (13) angeordnet ist.

11. Einstelleinrichtung nach Anspruch 2, eventuell nach einem der Ansprüche 3 bis 9 und nach Anspruch 10 oder 11, dadurch gekennzeichnet, daß das Federelementgehäuse (13) in Richtung auf das Spannkraftangriffselement (2) axial verschieblich, aber drehfest auf der Lagerhülse (12) des Spannelements (4) angeordnet ist.

12. Einstelleinrichtung nach Anspruch 2 und 11, dadurch gekennzeichnet, daß das Spannkraftangriffselement (2) an der dem Federelementgehäuse (13) zugewandten Seite und das Spannelement (4) an der dem Spannkraftangriffselement (2) zugewandten Seite jeweils mit einem Reibbelag (7, 8) versehen sind.

13. Einstelleinrichtung nach einem der Ansprüche 10 bis 13, dadurch gekennzeichnet, daß innerhalb des Federelementgehäuses (13) zusätzlich zu dem Federelement (9) mindestens eine Ausgleichscheibe (14, 15) vorgesehen ist.

14. Einstelleinrichtung nach Anspruch 8, ggf. nach Anspruch 9 und nach einem der Ansprüche 10 bis 13, dadurch gekennzeichnet, .daß die Lagerhülse- (12) des Spannelements (4) eine innerhalb des Federelementgehäuses (13) liegende umfassende Fixierungsnut (16) aufweist und in die Fixierungsnut (16) ein das Federelement bzw. das Federelement (9) und die Ausgleichscheibe (14, 15) axial festlegendes Fixierungselement (17), z. B. ein Sprengring eingesetzt ist.

15. Einstelleinrichtung nach einem der Ansprüche 10 bis 14, dadurch gekennzeichnet, daß das Federelementgehäuse (13) an der dem Spannkraftangriffselement (2) abgewandten Seite mit einer Abdeckscheibe (18) verschlossen ist.

16. Einstelleinrichtung nach einem der Ansprüche 10 bis 14 und nach Anspruch 15, dadurch gekennzeichnet, daß die Abdeckscheibe (18) einen radial verlaufenden Verbindungssteg (19) aufweist und der Verbindungssteg (19) einerseits in Schlitze (20) der Lagerhülse (12) des Spannelements (4) und andererseits in Schlitze (21) des Federelementgehäuses (13) eingreift.

17. Einstelleinrichtung nach einem der Ansprüche 10 bis 14 und nach Anspruch 15, dadurch gekennzeichnet, daß die Abdeckscheibe (18) mindestens eine Innennase (22) und mindestens eine Außennase (23) aufweist und die Innennase bzw. die Innennasen (22) in einen Schlitz bzw. in Schlitze (20) der Lagerhülse (12) und die Außennase bzw. die Außennasen (23) in einen Schlitz bzw. in Schlitze (21) des Federelementgehäuses (13) eingreifen.

18. Einstelleinrichtung nach einem der Ansprüche 15 bis 17, dadurch gekennzeichnet, daß die Abdeckscheibe (18) mittels einer Arretierungsschraube (5) am Federelementgehäuse (13) befestigt ist.

19. Einstelleinrichtung nach einem der Ansprüche 10 bis 18, dadurch gekennzeichnet, daß das Federelementgehäuse mit einer Schutzkappe versehen ist.

# Fig. 1

Fig. 2

EP 0 384 422 A1

**Fig. 3**

# Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | US - A - 4 017 059 (LAINE) <br> * Gesamt * | 1 | F 16 H 7/10 |
| A |  | 1-6 |  |
| A | US - A - 4 618 336 (ISOBE) <br> * Gesamt * | 1-6 |  |
| A | EP - A1 - 0 050 238 (BMW) <br> * Gesamt * | 1-19 |  |
| A | DE - A - 1 675 098 |  |  |

RECHERCHIERTE SACHGEBIETE (Int Cl⁵)

F 16 H 7/00

Der vorliegende Recherchenbericht wurde für alle Patentansprüche erstellt.

| Recherchenort <br> WIEN | Abschlußdatum der Recherche <br> 23-05-1990 | Prüfer <br> HEMMELMEIER |
|---|---|---|